# EUROPEAN PATENT APPLICATION

(11) **EP 2 143 473 A1**
(43) Date of publication of application: **13.01.2010**
(21) Application number: 09009007.7
(22) Date of filing: 10.07.2009
(51) Int. Cl.: B01D 21/00, B01D 17/06, B03C 5/02, C02F 1/48

(54) **Lamella separator with lamellae having electrically charged surfaces**

(30) Priority: 10.07.2008 NL 1035683
(71) Applicant: Vitens N.V., 8019 BE Zwolle (NL)
(72) Inventor: Bakker, Simon Marinus, 8016 HX Zwolle (NL)
(74) Representative: op den Brouw-Sprakel, Vera Stefanie Irene

(57) **Abstract**

The present invention relates to a device for separating insoluble components from a liquid, which device essentially consists of a housing (2) having an inlet opening and an outlet opening (3) and, disposed between said inlet opening and said outlet opening, a packet (7) consisting of a number of spaced-apart parallel plates, which housing makes a certain angle with the horizontal, and means for supplying the liquid to the housing and for discharging the insoluble components and the purified liquid, which plates form separate flow channels, through which flow channels the liquid flows, whereby the plates have a surface which can be electrically charged.

## Description

The present invention relates to a device for separating insoluble components from a liquid, which device essentially consists of a housing having an inlet opening and an outlet opening and, disposed between said inlet opening and said outlet opening, a packet consisting of a number of spaced-apart parallel plates, which housing makes a certain angle with the horizontal, and means for supplying the liquid to the housing and for discharging the insoluble components and the purified liquid, which plates form separate flow channels, through which flow channels the liquid flows. The present invention further relates to a method for carrying out a separation of insoluble components from a liquid.

To purify (surface) water, a number of steps are carried out, among which pre-filtration, aeration, fine filtration, using rapid sand filters and/or active carbon, post-filtration, using slow sand filters, and finally storage of the purified water. If necessary, chemicals may be added in one or more of the aforesaid steps, in particular in order to promote the flocculation and sedimentation of undesirable components or in order to adjust the pH value to a desired level.

In the preparation of drinking water, use is generally made of sedimentation basins, wherein the water, which contains suspended solids, is maintained in the basin for a certain period of time, so that the suspended solids can settle on the bottom. To aid the removal of the aforesaid components, use is generally made of so-called flocculants. The aforesaid sedimentation basins are currently also provided with so-called lamella separators, as disclosed in U.S. Pat. No. 4,889,624. Such lamella separators function to enhance the efficiency of the sedimentation separation. Lamella separators are also disclosed in U.S. Pat. Nos. 4,133,771 and 3,852,199, and in European patent application No. 1 854 524.

From British publication GB 2 024 03 there is known an installation for removing solids from water, which installation comprises two separate compartments, wherein an electrostatic treatment is carried out in the first compartment and an electrolytic treatment is carried out in the second compartment. The installation is configured so that an electric field is established in the first compartment, whilst air is supplied and the bubbles thus formed become electrically charged, to which bubbles the particles to be separated become attached, thereby effecting a flocculation action. Since a turbulence effect is created in the liquid, the solid particles will collide with each other, as a result of which flocculation will take place. The liquid to be treated flows in a direction concurrent with gravity in both compartments, whilst a flow of electrically charged air bubbles takes place countercurrent thereto.

The object of the present inventors is to improve the separation efficiency of a lamella separator.

Another object of the present invention is to provide a device for separating insoluble components from a liquid, using a lamella separator, which lamella separator is designed so that the risk of the lamella separator clogging up is minimised.

Another object of the present invention is to provide a method and a device for continuous separation of particles from the liquid phase without filtration.

According to the present invention, the device as referred to in the introduction is **characterised in that** the packet of plates is made up of one or more plates whose surface can be electrostatically charged.

One or more of the aforesaid objects can be achieved by implementing the above aspect. The present inventors assume that the surface of the plates present in the lamella separator plays an important part in increasing the separation efficiency of the lamella separator, in particular when the surface of the plate is electrostatically charged, which will result in the suspended solids in the liquid to be purified being attracted by the plate surface, so that a better separation is effected than if the aforesaid electrostatic charge is not used. The present invention is designed so that the separation of particles from the liquid phase takes place in one compartment. The present inventors further assume that it is possible with the present invention to keep certain components away from the plates surface, in particular by setting the charge on the surface so that repulsion takes place. It is thus achieved that certain components, such as a high-molecular material, for example humic acids, will not adhere to the plate surface, which adherence can lead to the formation of a biofilm, which biofilm may adversely affect the separation efficiency of the lamella separator. The present invention thus relates to the use of an induced electrostatic field, wherein particles are continuously separated from the liquid phase under the influence of gravity, whilst filtration need not take place. The invention in particular relates to the separation of particles having a particle size in the range of < 3 µm, in particular 1 nm - 3 µm, viz. a particle size which usually can only be separated from the liquid phase by using membrane technology.

In the present device it is in particular preferable if the electrostatically chargeable plates comprise an electrically conductive core, which core extends substantially along the entire length of the plate and which is surrounded by an electrical insulator.

The electrostatic charge to be used in the present device can be set so that there will be no flow of electric current between the adjacent plates. More particularly, the present invention should not be confused with electrolysis, in which, on the contrary, the flow of an electric current is a precondition for the process to succeed. The present invention is in particular based on the surface of the plates of the lamella separator being electrically charged such that the solids present in the liquid will move to the plate surface, so that the desired separation efficiency will be achieved.

The electrostatic charge used in the present invention preferably comprises a voltage range of at least 2 kV, in particular at least 10 kV, preferably at most 20 kV. If a voltage range of less than 2kV is used, for example 220 V, a small electrostatic charge will be observed on the surface of the parallel plates of the lamella separator, which electrostatic charge is insufficient to cause the solids present in the liquid to move to the surface of the parallel plates of the lamella separator.

Depending on the nature of the solid particles present in the liquid to be purified, the surface of the plates of the lamella separator may be either negatively charged or positively charged.

Preferably, flat plates are used, so that the liquid will flow in a steady, stable and laminar flow pattern over the plates, countercurrent to gravity. The plates are preferably arranged to make an angle of 40 - 80°, for example 60°, with the horizontal. The device is designed so that it is preferable if the means for supplying the liquid to the housing and discharging the insoluble components and the purified liquids are arranged so that the liquid will flow in a direction countercurrent to gravity in the flow channels. In a special embodiment, the spacing between the plates ranges from 0.1 - 15 cm, in particular 1 - 10 cm.

The present invention further relates to a method for carrying out a separation of insoluble components in the aforesaid device, wherein the packet of plates is composed so that the surface of one or more plates can be electrostatically charged. In particular, a flow in a direction countercurrent to gravity of the liquid to be separated is effected in the packet of slightly spaced-apart parallel plates, in particular the lamella separator, wherein an electrostatic charge is applied to the aforesaid plates, with the components dissolved in the liquid moving to the surface of the plate, so that the aforesaid components are removed from the liquid. The liquid thus purified is subsequently collected and prepared for other uses.

In a special embodiment of the present invention, a positive charge may be applied to the plates at the beginning of the separation process, which positive charge is substituted for a negative charge at the end of the separation process so as to enable easy removal of the solids present on the plates. It will be understood that it is also possible to use a different order of applying charge. If the adherence of components to the plates can be considered to be tenacious, the plates can be cleaned by means of a water/air mixture; even chemical cleaning is possible, whether or not in countercurrent in combination with charge reversal.

In a special embodiment it is preferable that one plate of a flow channel formed by two spaced-apart parallel plates is an insulated conductor, to which an electrostatic field is applied, whilst the other plate is not insulated and connected to ground.

According to yet another embodiment, both plates of a flow channel formed by two spaced-apart parallel plates may consist of an insulated conductor, to which conductors electrostatic fields of opposite polarity are applied, whilst furthermore different voltage levels may be used for the two plates.

In a special embodiment, the packet of spaced-apart parallel plates used in the present invention may be regarded as being a number of sandwich plates arranged in side-by-side relationship, viz. a packet plates arranged side by side in pairs, with the feed flow to be purified flowing between said plates. It is in particular preferable if one plate consists of an insulated conductor, to which a highly-voltage field is applied, and the other electrode, which is not insulated, is connected to ground (for directing the electrostatic field). The plates are preferably flat, viz. not exhibiting any curves or bends, so that laminar flow of the liquid to be treated is ensured.

In another embodiment, the aforesaid sandwich structure is configured so that both plates consist of an insulated conductor and a high-voltage field is applied to both plates. Said high-voltage fields are of opposite polarity, whilst also different voltage levels may be used for the two fields.

In a special embodiment, it is preferable with a view to removing insoluble components present on the plates to wash the plates with a mixture of air and water. In another embodiment, the surface being flowed through consists of concentric pipes, with the flow taking place through respective pairs of pipes, similar to the aforesaid sandwich construction. One of the aforesaid pipes, which is not insulated, functions as a counter electrode for directing the electrostatic field and which is connected to ground. According to another embodiment, the two pipes are insulated and connected to electrostatic fields of opposite polarity, whilst in a special embodiment different voltage levels may be used for the applied fields.

The high-voltage field is an induced field, the high-voltage source is provided with current limiting means, loss of charge is only compensated, so that the degree of electrical continuity is very low.

In addition to the direction of the electrostatic field, also the polarity of the charge plays a part. In a special embodiment, the present device preferably consists of a series-connected lamella separator system, in which the plates, on which a solid particles are adsorbed, are positively charged in the first separator, for example, and negatively charged in a second separator. An advantage of such an embodiment is that it is possible to separate uncharged, negatively charged as well as positively charged particles from the feed flow to be treated.

The present invention will now be explained in more detail by means of an example, in which connection it should be noted, however, that the present invention is by no means limited to such special examples.

Figure 1 is a schematic front view of an embodiment of the present invention.

Figure 2 is a schematic view of the lamella separator used in figure 1.

Figure 3 is a schematic view of a plate as used in the lamella separator of figure 2.

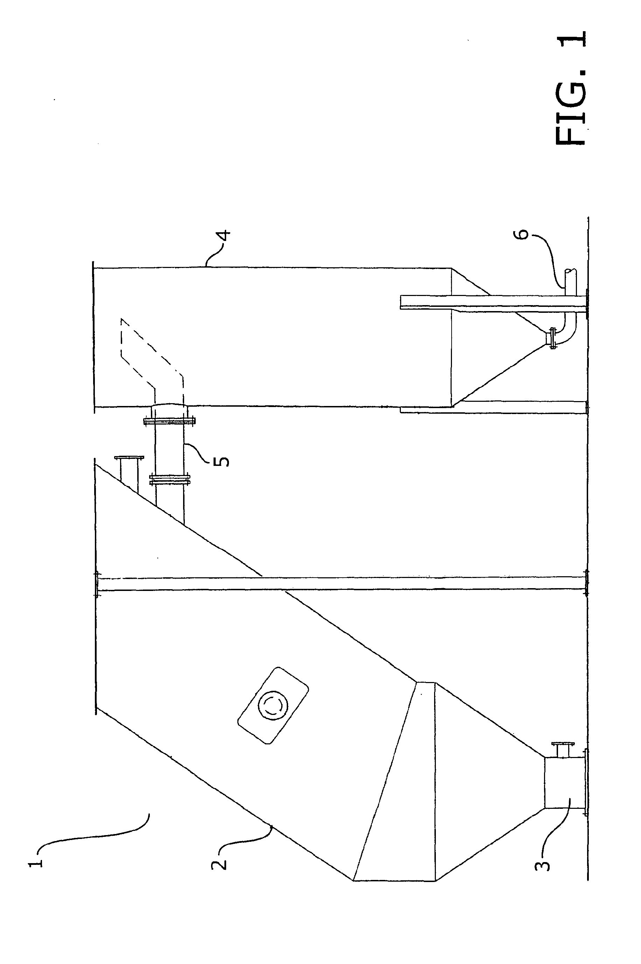

In figure 1, the device for separating insoluble components from a liquid, in particular water, schematically indicated at 1, comprises a housing 2 which is connected to a container 4 via a pipe 5. The housing 2, in which the packet of spaced-apart parallel plates (not shown) is disposed, is provided with an outlet 3 for solids at the bottom side. The container 4 is provided with an outlet 6 for purified liquid at the bottom side thereof.

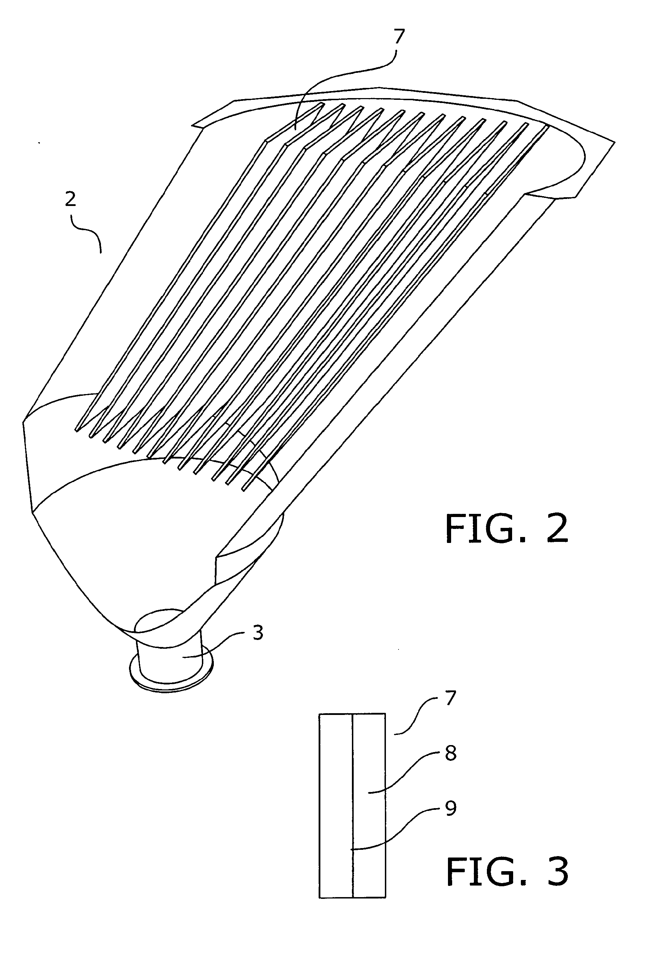

In figure 2, the housing 2 is schematically shown in a cutaway configuration, in which the parallel plates or lamellae 7 are schematically represented, which plates 7 are oriented at an angle, preferably between 30 and 80°, with the normal.

In figure 3, the plate 7 is schematically represented, which plate 7 comprises an electrically conductive core 9 and an electrical insulator 8 surrounding said core. During operation, an electrostatic field will be applied to the plates 7, so that an electrostatic charge will form on the outer side of the plate 7, in particular the electrical insulator 8, to ensure that the solids contained in the liquid to be purified will move to the surface of the plate 7.

In the present invention it is preferable if the liquid to be treated is passed through the housing 2 in a direction countercurrent to gravity, with the liquid thus treated being transported to the container 4 via the pipe 5. Solids present on the surface of the plate 7 are removed from the housing 2 via the pipe 3.

In a special embodiment, every other one of the plates 7 present in the housing 2 may be provided with an electrical conductor 9 so as to thus provide the surface of the plates 7 in question with an electrostatic charge. In a special embodiment it is moreover possible to provide only a few plates, possibly in random order, with an electrical conductor 9. It is furthermore possible to apply a positive charge to certain plates 7 and a negative electric charge to other plates 7. In addition to that it is possible to carry out the present method so that an electric charge is applied to the plates 7 in a pulsating manner during the separation process. The magnitude of the electrostatic charge may vary with each plate 7.

The present invention in particular relates to the capture, absorption and separation of solid particles from a liquid flow without filtration, wherein a high sedimentation efficiency for small and charged particles is achieved. Furthermore, the use of flocculants is minimised. The present invention in particular relates to a combination of an electrostatic high-voltage field and gravity, wherein the method can be carried out in a continuous process, possibly alternated with purification by reversing the charge on the plates and gravity, or washing with air/water and/or chemicals. Such an operation may or may not be carried out with an interruption of the feed flow. An important implementation of the present device, the present device is disposed downstream of the sand filters in the purification of ground water and surface water for the purpose of reducing the number of particles having a particle size of up to 10 µm. The present invention is also suitable for use as a system for the pre-treatment of water in drinking water preparation.

## Claims

1. A device for separating insoluble components from a liquid, which device essentially consists of a housing having an inlet opening and an outlet opening and, disposed between said inlet opening and said outlet opening, a packet consisting of a number of spaced-apart parallel plates, which housing makes a certain angle with the horizontal, and means for supplying the liquid to the housing and for discharging the insoluble components and the purified liquid, which plates form separate flow channels, through which flow channels the liquid flows, **characterised in that** the packet of plates is made up of one or more plates whose surface can be electrostatically charged.

2. A device according to claim 1, **characterised in that** the electrostatically chargeable plates comprise an electrically conductive core, which core extends substantially along the entire length of the plate and which is surrounded by an electrical insulator.

3. A device according to one or more of the preceding claims, **characterised in that** the electrostatic charge on the surface can be set so that there will be no flow of electric current between the adjacent plates.

4. A device according to one or more of the preceding claims, **characterised in that** electrostatic field comprises a voltage range of at least 2 kV.

5. A device according to one or more of the preceding claims, **characterised in that** the electrostatic field has a negative polarity.

6. A device according to one or more of the preceding claims, **characterised in that** the electrostatic field has a positive polarity.

7. A device according to one or more of the preceding claims, **characterised in that** one plate of a flow channel formed by two spaced-apart parallel plates is an insulated conductor, to which an electrostatic field is applied, whilst the other plate is not insulated and connected to ground.

8. A device according to one or more of the preceding claims 1-6, **characterised in that** both plates of a flow channel formed by two spaced-apart parallel plates consist of an insulated conductor, to which conductors electrostatic fields of opposite polarity are applied.

9. A device according to claim 8, **characterised in that** different voltage levels are used for the two plates.

10. A device according to one or more of the preceding claims, **characterised in that** the device comprises at least two series-connected packets consisting of a number of spaced-apart parallel plates.

11. A device according to claim 10, **characterised in that** the electrostatic charges applied to the two series-connected packets consisting of a number of spaced-apart parallel plates are of opposite polarity.

12. A device according to one or more of the preceding claims, **characterised in that** said plates are flat.

13. A device according to one or more of the preceding claims, **characterised in that** the plates are oriented at an angle of 40 - 80° to the horizontal.

14. A device according to one or more of the preceding claims, **characterised in that** the means for supplying the liquid to the housing and discharging the insoluble components and the purified liquids are arranged so that the liquid will flow in a direction countercurrent to gravity in the flow channels.

15. A device according to one or more of the preceding claims, **characterised in that** the voltage range is maximally 20 kV.

16. A device according to one or more of the preceding claims, **characterised in that** the spacing between the plates ranges from 0.1 - 15 cm, in particular 1 - 10 cm.

17. A device according to one or more of the preceding claims, **characterised in that** the flow channels are configured as concentric pipes, one of which pipes, which is not insulated and which is connected to ground, functions as a counter electrode for directing the electrostatic field.

18. A device according to one or more of the preceding claims, **characterised in that** the flow channels are configured as concentric pipes, the two pipes being insulated and being connected to electrostatic fields of opposite polarity.

19. A method for separating insoluble components from a liquid in a device as defined in one or more of the preceding claims, **characterised in that** an electric current is supplied to the spaced-apart parallel plates so as to provide the surface of the parallel plates with an electrostatic charge, wherein the liquid to be treated is passed over the surface of the parallel plates in a direction countercurrent to gravity, wherein the liquid, from which the insoluble materials have been removed, is discharged from the housing via the outlet opening.

20. A method according to claim 19, **characterised in that** the insoluble components have a particle size in the 1 nm - 3 µm range.

21. A method according to either one of claims 19-20, **characterised in that** the liquid to be treated is passed over the surface in laminar flow.

22. A method according to one or more of claims 19-21, **characterised in that** the plates are washed with a mixture of air and water for removing insoluble components present on the plates.

23. Use of spaced-apart parallel plates, which plates are arranged so that flow channels are formed, through which flow channels the liquid to be treated flows, for separating insoluble components from the liquid, wherein the surface of said plates is electrostatically charged.
